# EUROPÄISCHE PATENTANMELDUNG

(11) **EP 1 905 627 A1**
(43) Veröffentlichungstag der Anmeldung: **02.04.2008**
(21) Anmeldenummer: 07015766.4
(22) Anmeldetag: 10.08.2007
(51) Int. Cl.: B60J 1/20

(54) **Fensterrollo mit reibungsgemindertem Antrieb**

(30) Priorität: 27.09.2006 DE 102006046069; 27.09.2006 DE 102006046065; 27.09.2006 DE 102006046064; 13.10.2006 DE 102006049065; 13.11.2006 DE 102006053680
(71) Anmelder: BOS GmbH & Co. KG, 73760 Ostfildern (DE)
(72) Erfinder: Hansen, Melf, 75053 Gondelsheim (DE); Stark, Wolfgang, 73770 Denkendorf (DE)
(74) Vertreter: Rüger, Barthelt & Abel Patentanwälte

(57) **Zusammenfassung**

Zum Antrieb eines Fensterrollos (21) für Kraftfahrzeuge werden in der Verlängerung der Führungsschienen (25,26) zwei Antriebszahnräder (48,49) vorgesehen. Die Antriebszahnräder sind drehelastisch mit der Wickelwelle (36) gekuppelt. Der Antrieb geschieht mit Hilfe eines Getriebemotors (43) der entweder auf die Zahnräder oder auf die Wickelwelle einwirkt. Die Positionierung der Antriebszahnräder in Verlängerung der Führungsschienen vermeidet die beim Stand der Technik vorhandenen Führungsrohre, wodurch die Reibverluste, die bis zu 80% der Antriebskraft beim Stand der Technik verzehrt, vermieden wird. Außerdem vereinfacht sich die Herstellung, weil die kompliziert geformten Verbindungsrohre vermieden sind.

## Beschreibung

Aus dem Stand der Technik sind beispielsweise Heckfensterrollos bekannt, die elektrisch angetrieben sind. Diese Fensterrollos nach dem Stand der Technik weisen eine unterhalb der Hutablage drehbar gelagerte Wickelwelle auf, an der mit einer Kante die Rollobahn befestigt ist. Die andere Kante ist mit einem Zugstab verbunden, der endseitig in Führungsschienen geführt ist. Die Führungsschienen verlaufen neben den seitlichen Rändern des Heckfensters, ausgehend von der Hutablage bzw. darunter, bis in die Nähe der Fensteroberkante. Um die Rollobahn vorzuspannen, sitzt in der Regel in der Wickelwelle oder daneben ein Federmotor, durch den die Wickelwelle im Aufwickelsinne der Rollobahn vorgespannt ist.

Das Abwickeln bzw. Aufspannen der Rollobahn geschieht mit Hilfe von linienförmigen Schubgliedern, die in der Nutenkammer der Führungsschienen ausknicksicher geführt sind. Zum Antrieb der Schubglieder ist ein gemeinsamer Getriebemotor vorgesehen, der neben der Wickelwelle ungefähr auf Höhe von deren Mitte liegt. Um den Getriebemotor mit den unteren Enden der Führungsschienen zu verbinden sind Führungsrohre vorgesehen, die an dem Getriebegehäuse des Getriebemotors enden. Mit Hilfe dieser Führungsrohre werden die Schubglieder zwischen dem Antriebsmotor und den Führungsschienen ausknicksicher geführt, damit sie die Schubfunktion erbringen können.

Da aus Platzgründen der Motor verhältnismäßig dicht neben der Wickelwelle sitzt, verlaufen die Führungsrohre in der Nähe des Getriebemotors etwa parallel zu der Wickelwelle und müssen bei den Führungsschienen in einer Richtung rechtwinklig zur Wickelwelle umgelenkt werden. Wiederum aus Platzgründen ist der Krümmungsradius der Führungsrohre neben der Einmündung in die Führungsschienen vergleichsweise sehr eng.

Die Praxis zeigt, dass bei derartigen Rollos der überwiegende Teil der Antriebskraft, den der Getriebemotor liefert, von den Schubgliedern in den Führungsrohren verzehrt wird. Nur ein vergleichsweise kleiner Anteil der vom Motor gelieferten Kraft wird tatsächlich zum Ausfahren des Rollos benötigt.

Die Führungsrohre haben im Allgemeinen einen relativ komplizierten, dreidimensionalen Verlauf. Damit ist ihre Herstellung und Anpassung an die Fahrzeuggegebenheiten schwierig.

Hinzu kommt, dass die Schubglieder auch in jenem Abschnitt geschützt werden müssen, der aus der Sicht der Führungsschienen hinter dem Motor liegt. Die Länge dieses über den Motor überstehenden Teils des Schubglieds hängt von dem Ausfahrhub des Rollos ab. Am wenigsten steht das Schubglied über, wenn das Rollo ausgefahren ist, während der Überstand am größten ist, wenn das Rollo vollständig eingefahren ist. Da der Hub üblicherweise größer ist als die halbe Breite der Wickelwelle, muss das den überschüssigen Teil aufnehmende Speicherrohr ebenfalls kompliziert dreidimensional an die Platzverhältnisse im Fahrzeug angepasst werden. Somit ist nicht nur die Fabrikation des Fensterrollos auf der Seite des Produzenten aufwendig, sondern auch die Montage im Fahrzeug ist problematisch.

Die Schwierigkeit der bekannten Anordnung wurde zuvor in Verbindung mit einem Heckscheibenrollo beschrieben. Grundsätzlich ähnliche Schwierigkeiten ergeben sich bei Dachfensterrollos, die in einer vergleichbaren Weise angetrieben werden.

Die hohen Reibungsverluste der Schubglieder in den Führungs- und Speicherrohren erschweren obendrein erheblich die Gestaltung und Bemessung eines elektrischen Einklemmschutzes, der auf der Messung des Motorstroms basiert. Je nachdem wie groß die Reibungsverluste sind, steht bei gegebenem Abschaltstrom mehr oder weniger Kraft zur Verfügung, um Körperteile einzuklemmen oder einzuquetschen.

Ausgehend hiervon ist es Aufgabe der Erfindung ein Fensterrollo für Kraftfahrzeuge zu schaffen, bei dem der Antrieb geringere Reibungsverluste aufweist.

Diese Aufgabe wird erfindungsgemäß Fensterrollo für Kraftfahrzeuge gelöst, das die Merkmale des Anspruchs 1 aufweist.

Bei dem neuen Fensterrollo ist, wie üblich, eine drehbar gelagerte Wickelwelle vorgesehen, die zwei Stirnenden aufweist. An dieser Wickelwelle ist in der üblichen Weise die Rollobahn mit einer Kante befestigt. Die andere Kante der Rollobahn ist mit einem Zugstab verbunden, der endseitig in Führungsschienen läuft. Die Führungsschienen erstrecken sich beidseits der aufgespannten Rollobahn und definieren den Weg, den der Zugstab von der eingefahrenen zur ausgefahrenen Stellung durchläuft.

Der Antrieb des Zugstabs erfolgt mit Hilfe von zwei Schubgliedern. Jedes der beiden Schubglieder ist einer entsprechenden Führungsschiene zugeordnet und wird von dieser geführt. Die beiden Schubglieder wirken endseitig mit dem Zugstab zusammen, um den Zugstab von der Wickelwelle fortbewegen zu können.

Um die Schubglieder anzutreiben ist für jedes Schubglied ein eigenes Antriebszahnrad vorgesehen. Dieses kann unmittelbar in der Nähe des Fußendes der Führungsschiene, d.h. in der Nähe der Wickelwelle vorgesehen sein. Damit entfällt ein nennenswertes oder längeres Stück Führungsrohr zwischen dem Fußende der Führungsschiene und dem Antriebszahnrad. Das aus der jeweiligen Führungsschiene austretende Schubglied kann praktisch unmittelbar in ein Getriebegehäuse einlaufen, das dem Fußende der Führungsschiene benachbart ist. Hierdurch werden die beim Stand der Technik üblichen Verbindungsrohre eingespart.

Durch das Einsparen der Verbindungsrohre wird in zweierlei Hinsicht Antriebskraft eingespart. Zum Einen entfällt die Antriebskraft, die erforderlich ist, um die entsprechende Länge an Schubglied durch ein gegebenenfalls sogar gerade verlaufendes Führungsrohr zu bewegen. Zum Anderen wird Reibungskraft eingespart, weil der gekrümmte Verlauf des Verbindungsrohres fehlt, der Ursache ist für eine deutlich erhöhte Reibung des Schubglieds in dem Verbindungsrohr. Die Antriebskraft, die vom Motor geliefert wird, steht nunmehr im Wesentlichen ausschließlich zur Bewegung des Rollos zur Verfügung. Die Reibungskraft, die die Schubglieder in der Führungsschiene erzeugen, ist vergleichsweise klein und kalkulierbar, weil die Führungsschienen fast gerade verlaufen.

Zum Antrieb des Rollos ist in der üblichen Weise ein elektrischer Antriebsmotor vorhanden. Mit Hilfe des Antriebsmotors wird gleichzeitig auch die Kraft erzeugt die benötigt wird, um die Rollobahn beim Einfahren auf der Wickelwelle aufzuwickeln und gleichzeitig die Schubglieder zurück zu bewegen.

Ferner sind Ausgleichsmittel vorgesehen, um die Längendifferenz zwischen der Vorschubbewegung der Rollobahn und dem Schubglied auszugleichen. Das Schubglied läuft an einem Antriebszahnrad vorbei, dessen Durchmesser konstant ist. Damit wird je Umdrehung des Antriebszahnrads immer die gleiche Länge an Schubglied bewegt. Bei der Rollobahn sieht dies anders aus. Die Rollobahn bildet einen spiralförmigen Wickel auf der Wickelwelle. Beim Abwickeln der Rollobahn ändert sich der effektive Durchmesser des Wickels und somit die Menge an Rollobahn, die beim Abwickeln pro Umdrehung von der Wickelwelle abgezogen wird. Die Längendifferenz ist nicht allzu groß, muss aber beherrscht werden. Hierzu dienen die Ausgleichsmittel. Die Ausgleichsmittel erzeugen die Tuchspannung in der Rollobahn.

Da bei der neuen Lösung keine dreidimensionale Umlenkung des Schubglieds auftritt, kann ein Schubglied verwendet werden, das lediglich an einer Seite eine Verzahnung aufweist, oder das eine Rundumverzahnung aufweist. Die Rundumverzahnung eröffnet die Möglichkeit durch eine Art Schraubenbewegung das Schubglied in der Führungsschiene bzw. der Anordnung zu positionieren. Durch die Schraubbewegung wird das Schubglied an dem feststehenden Antriebszahnrad gleichsam "vorbeigeschraubt".

Je nach Karosserieverhältnissen können die Schubglieder entweder frei in der Karosserie verlaufen, oder es sind hierzu Speicherrohre vorgesehen, die aus einem flexiblen Material bestehen. Speicherrohre aus flexiblem Material können frei in der Karosserie verlegt werden und brauchen seitens des Herstellers des Fensterrollos nicht vorgeformt zu werden.

Sehr einfache Antriebsverhältnisse können sich ergeben, wenn der Antriebsmotor unmittelbar mit der Wickelwelle getrieblich gekuppelt ist.

Die Antriebszahnräder sind bei dieser Lösung entweder drehelastisch mit der Wickelwelle gekuppelt oder sitzen auf einer Verbindungswelle, die durch die Wickelwelle hindurchführt oder an dieser vorbeiläuft. Eine andere Möglichkeit bei Verwendung einer separaten Verbindungswelle besteht darin, die Zahnräder drehfest auf der Verbindungswelle anzuordnen und die Verbindungswelle drehelastisch mit der Wickelwelle zu kuppeln.

Bei Verwendung einer separaten Verbindungswelle eröffnet sich auch die Möglichkeit, die Verbindungswelle über den Motor anzutreiben.

Die elastischen Glieder, die den Drehausgleich bewerkstelligen, können Schraubenfedern sein oder Spiralfedern, ähnlich einer Antriebsfeder einer Uhr. Die Spiralfeder kann gegebenenfalls in dem Antriebszahnrad untergebracht sein, das hierzu eine taschenförmige Ausdrehung enthält.

Schließlich ist denkbar, die rotierenden Teile starr und unelastisch miteinander zu kuppeln und den Ausgleich zu erzeugen, indem zwischen dem Zugstab und dem dem betreffenden Ende des Zugstabs zugeordneten Schubglied eine Druckfeder untergebracht ist.

Entsprechend der Geometrie des Fensters kann der Zugstab längenveränderlich sein.

Um die Schubglieder knicksicher zu führen ist es vorteilhaft, wenn Führungsschienen Verwendung finden, die eine hinterschnittene Führungsnut enthalten. Eine solche hinterschnittene Führungsnut setzt sich, im Querschnitt gesehen, aus einer Nutenkammer und einem Nutenschlitz zusammen.

Im Übrigen sind Weiterbildungen der Erfindung Gegenstand von Unteransprüchen.

Die nachfolgende Figurenbeschreibung beschränkt sich auf die Erläuterung der für das Verständnis wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenenfalls vorhandene Detail.

In der Zeichnung sind Ausführungsbeispiele des Gegenstandes der Erfindung dargestellt.
- Fig. 1: zeigt eine aufgebrochene Fondpartie eines PKW's in einer perspektivischen Darstellung;
- Fig. 2: zeigt den prinzipiellen Aufbau des Heckfensterrollos des Fahrzeugs nach Fig. 1;
- Fig. 3: veranschaulicht die Verbindung zwischen einem der Antriebszahnräder und der Wickelwelle in einer vereinfachten perspektivischen Darstellung;
- Fig. 4: zeigt ein weiteres Ausführungsbeispiel, bei der die Antriebszahnräder auf einer Verbindungswelle drehfest angeordnet sind;
- Fig. 5: zeigt ein Ausführungsbeispiel, bei der die Verbindungswelle koaxial durch die Wickelwelle verläuft; und
- Fig. 6: zeigt ein Ausführungsbeispiel, bei der der Längenausgleich mit Hilfe von Druckfedern bewerkstelligt wird.

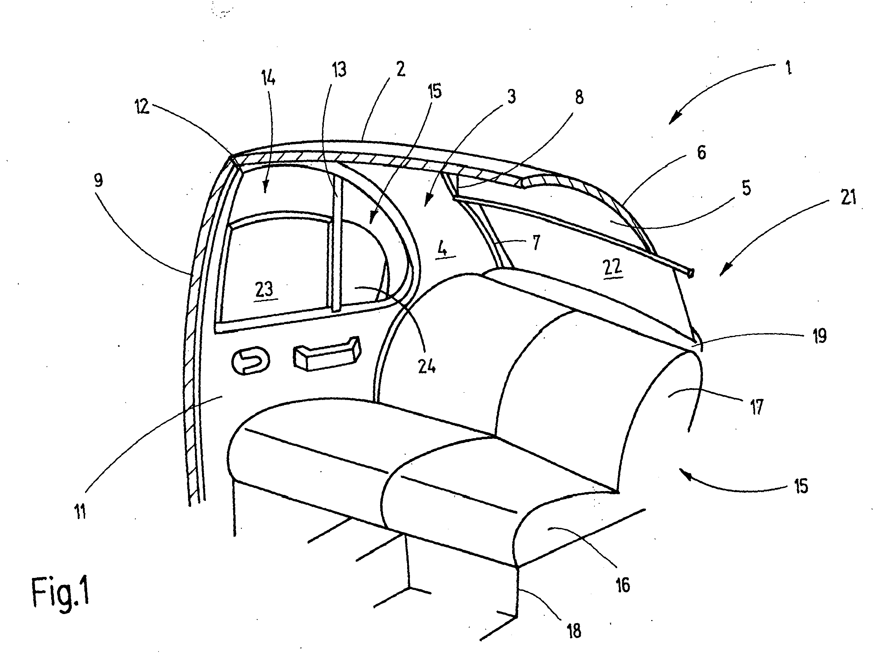

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, die Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 23 und in dem dreieckigen Abschnitt 15 eine Rollbahn 24.

Die Antriebsart der Rollobahnen 23 und 24 entspricht der Antriebsart des Heckscheibenrollos 21, weshalb es genügt, lediglich dessen Aufbau im Einzelnen zu erläutern.

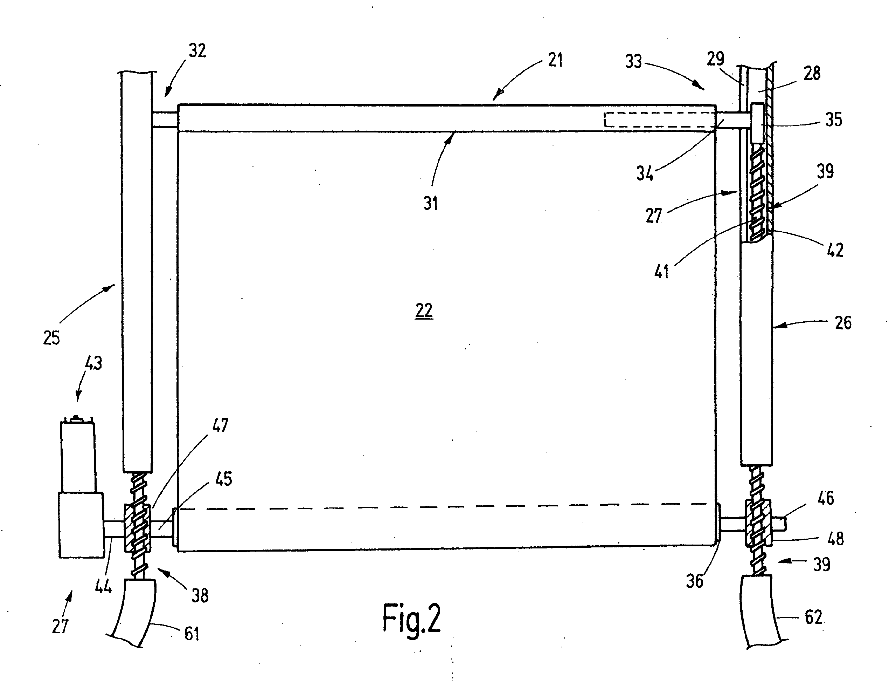

Gemäß Fig. 2 gehören zu dem Heckscheibenrollo 21 zwei seitlich des Heckfensters 5 verlaufende Führungsschienen 25 und 26 sowie ein Antriebssystem 27.

Die Führungsschienen 25 und 26 sind spiegelbildlich zueinander angeordnet und folgen dem Verlauf der Seitenkante des Heckfensters 5. Abweichend von der Darstellung in Fig. 2 konvergieren sie mehr oder weniger stark in Richtung auf das Dach 2.

Da die beiden Führungsschienen 25 und 26 untereinander gleich sind, genügt die Erläuterung der inneren Struktur der Führungsschiene 26. Die Erläuterung gilt sinngemäß für die Führungsschiene 25.

In der Führungsschiene 26 befindet sich eine hinterschnittene Führungsnut 27, deren Profil sich aus einer Nutenkammer 28 und einem Nutenschlitz 29 zusammensetzt. Die Weite des Schlitzes 29 ist kleiner als die lichte Weite der Nutenkammer 28, wodurch sich die hinterschnittene Struktur ergibt.

Die beiden Führungsschienen 25 und 26 dienen dazu, einen Zugstab 31 zu führen, an dem mit einer Kante die Rollobahn 22 befestigt ist. Der Zugstab 31 setzt sich aus einem Mittelstück zusammen, in dem zwei Endstücke 32 und 33 teleskopartig geführt sind. Das Mittelstück sitzt beispielsweise in einer an der Rollobahn 22 ausgebildeten schlauchförmigen Schlaufe.

Jedes der beiden Endstücke 32 und 33 weist eine Teleskopstange 34 auf, an deren freien Ende ein Gleitstück 35 sitzt. Die Teleskopstange 34 ist im Querschnitt so bemessen, dass sie durch den Schlitz 29 mit Spiel hindurchführt. Der Querschnitt des Gleitstücks 35 hingegen ist an den Querschnitt der Nutenkammer 28 angepasst, die beispielsweise Kreisquerschnitt hat.

Das von dem Zugstab 31 abliegende Ende der Rollobahn 22 ist an einer Wickelwelle 36 befestigt.

Die Antriebseinrichtung 27 dient dazu, die Rollobahn 22 zwischen der ausgezogenen Stellung, in der sie vor dem Heckfenster 5 ausgebreitet ist, in eine zurückgezogene Stellung zu überführen, in der der Zugstab 31 entweder auf der Hutablage 19 aufliegt oder durch den dort vorhandenen Schlitz zurückgezogen ist.

Zu der Antriebseinrichtung 25 gehören zwei linienförmige biegeelastische Schubglieder 38 und 39, die ebenfalls gleich ausgebildet sind. Jedes der Schubglieder 38, 39 setzt sich aus einer im Querschnitt kreisförmigen Seele 41 und einer auf der Außenseite der kreisförmigen Seele 41 befestigten Wendel 42 zusammen. Es entsteht hierdurch eine Art rundumverzahnte biegeelastische Zahnstange. Der Außendurchmesser der Schubglieder 38, 39 entspricht der lichten Weite der Nutenkammer 28. Hierdurch sind die beiden Schubglieder 38, 39 in ihren zugehörigen Führungsschienen 25 und 26 ausknicksicher geführt und können Druckkräfte übertragen. Ihr Durchmesser ist größer als es der Schlitzweite 29 entspricht, so dass sie auch bei Druckbelastung nicht seitlich durch den Schlitz 29 ausknicken können.

Zu der Antriebseinrichtung 27 gehört ferner ein Getriebemotor 43, dessen Ausgangswelle 44 starr mit de Achszapfen 45 der Wickelwelle 36 verbunden ist.

Auf den beiden Achszapfen 45 und 46 sitzt jeweils ein Stirnzahnrad 47 bzw. 48, das auf der Außenumfangsfläche mit einer Verzahnung versehen ist, die einen formschlüssigen Eingriff mit dem betreffenden zugehörigen Schubglied 38, 39 gestattet. Durch nicht weiter veranschaulichten Mittel werden die beiden Schubglieder 38, 39 in radialer Richtung gegen das zugehörige Antriebszahnrad 47, 48 angedrückt, damit stets der Eingriff bestehen bleibt. Die Schubglieder 38, 39 liegen auf derselben Seite bezogen auf die Drehachse auf dem zugehörigen Antriebszahnrad 47, 48 auf, auf der auch die Rollobahn 22 von der Wickelwelle 36 abläuft.

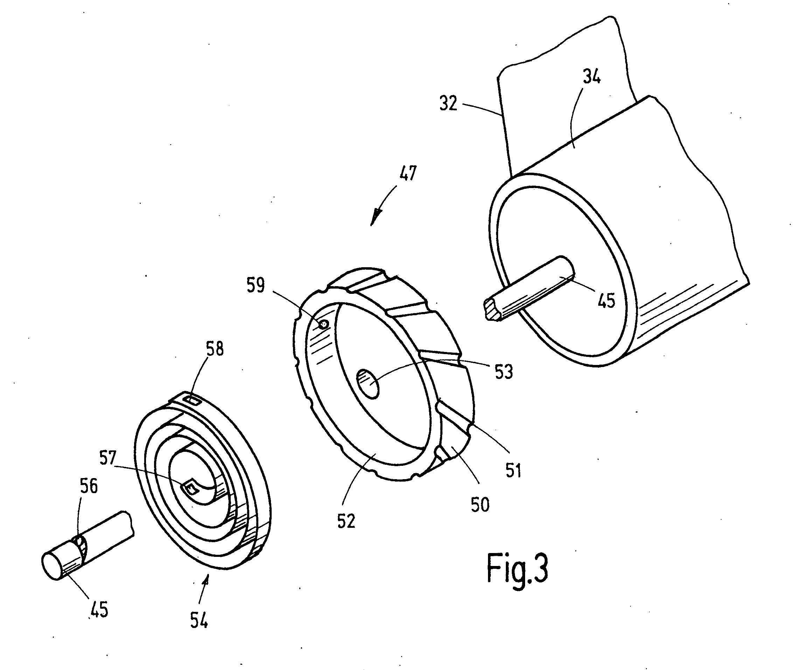

Das Zahnrad 47 ist auf dem Achszapfen 45 drehbar gelagert. Sinngemäß das Gleiche gilt für das Zahnrad 48 auf dem Achszapfen 46. Die kinematische Verbindung, über die ein Antriebsmoment übertragen wird, ist in Fig. 3 im Einzelnen veranschaulicht. Die dort gegebene Beschreibung gilt sinngemäß für beide Antriebszahnräder 47 und 48.

Das Antriebszahnrad 47 hat eine scheibenförmige Gestalt mit einer zylindrischen Außenumfangsfläche 50, in der als Verzahnung schräg verlaufende Nuten 51 ausgebildet sind, die den betreffenden Abschnitt der Wendel 42 aufnehmen. Koaxial zu der Außenumfangsfläche 50 enthält das Zahnrad 47 eine Ausdrehung 52, in der konzentrisch eine Lagerbohrung 53 enthalten ist, mit der das Zahnrad 47 auf dem Achszapfen 45 drehbar gelagert ist. Die Ausdrehungen 52 bildet ein Federgehäuse für eine Spiralfeder 54, die eine drehelastische Verbindung zwischen dem Achszapfen 45 und dem Zahnrad 57 herstellt. Hierzu ist der Achszapfen 45 an der entsprechenden Stelle mit einer aufgestülpten Nase 46 versehen, die als Wiederlager für eine an dem inneren Federende vorgesehene Öffnung 47 dient. Das außenliegende Federende enthält ebenfalls eine Öffnung 48, die formschlüssig mit einer Nase 49 verbindbar ist, die von der Außenumfangsfläche der Ausdrehung 52 radial nach innen zeigt.

Wie sich aus der späteren Funktionsbeschreibung ergibt, vollführt bei entsprechender Dimensionierung des effektiven Durchmessers des Zahnrads 47, bezogen auf den Ballen, den die aufgewickelte Rollobahn '22 auf der Wickelwelle 36 bildet, eine Relativdrehung gegenüber der Wickelwelle 36. Das Maß dieser Relativdrehung beträgt ca. maximal eine Umdrehung. Dadurch kann eine Spiralfeder 54 verwendet werden, die einen verhältnismäßig kurzen Wirkweg hat.

Die Darstellung in den Figuren ist nicht maßstäblich. Vielmehr geht es hier darum, das Wesentliche des erfindungsgemäßen Antriebskonzepts zu erläutern. Die einschlägigen Werte für die Bemessung der Führungsschienen 25 und 26 sowie der daraus resultierenden Außendurchmesser der beiden elastische biegsamen Schubglieder 38, 39 sind aus der Praxis bekannt.

Der Vollständigkeit halber sei noch erwähnt, dass aus der Sicht der jeweiligen Führungsschiene 25, 26 auf der gegenüberliegenden Seite des betreffenden Zahnrads 47, 48 sich ein biegeelastisches Speicherrohr 61 bzw. 62 befindet, das entsprechend der räumlichen Verhältnisse weitgehend frei im Fahrzeug verlegt wird.

Die Maßnahmen, die getroffen sind, um die Speicherrohre 61 und 62 ortsfest zu halten, sind, da sie für das Verständnis der Erfindung nicht von Bedeutung sind, nicht dargestellt. Ebenso fehlt beispielsweise ein eventuell vorhandenes Gehäuse, das das Zahnrad 47 bzw. 48 umgibt und das zum Durchtritt des zugehörigen biegeelastischen Schubglieds 38, 39 eine entsprechende Tangentialbohrung enthält.

Die Wirkungsweise der gezeigten Anordnung ist wie folgt:
Es wird hierbei davon ausgegangen, dass zunächst die Rollobahn 22 vollständig, d.h. so weit wie möglich, auf der Wickelwelle 36 aufgewickelt ist. In dem aufgewickelten Zustand sind die in den beiden Zahnrädern 47, 48 enthaltenen Spiralfedern 54 geringfügig vorgespannt. Aufgrund der Vorspannung werden die damit in Eingriff stehenden und somit formschlüssig gekuppelten Schubglieder 38 und 39 elastisch in Richtung auf die beiden Gleitstücke 35 des Zugstabs 31 vorgespannt und liegen dort an. Die Vorspannkraft der Spiralfedern 54 hält die Rollobahn 22 zwischen der Wickelwelle 36 und dem Zugstab 31 gestrafft.

Wenn der Benutzer, ausgehend von dieser Position, das Heckfensterrollo 21 ausfahren will, setzt er über einen elektrischen Schalter den Getriebemotor 43 in Gang. Der laufende Getriebemotor 43 dreht die Wickelwelle 36 zusammen mit den beiden damit drehfest gekoppelten Achszapfen 45 und 46 in Richtung des Abwickelns der Rollobahn 22 von der Wickelwelle 36.

In der gleichen Drehrichtung bewegen sich die beiden Antriebszahnräder 47 und 48. Da ihr effektiver Durchmesser mit dem Außendurchmesser des Ballens auf der Wickelwelle 36 übereinstimmt, wenn die Rollobahn 22 entsprechend dem geöffneten Rollo vollständig aufgewickelt ist, bewegen sich zunächst die beiden Schubglieder 38 und 39 mit exakt derselben Geschwindigkeit, wie der Zugstab 31, d.h. die bewegliche Vorderkante der Rollobahn 22.

Mit fortschreitendem Abwickeln der Rollobahn 22 vermindert sich der auf der Wickelwelle vorhandene Ballen. Pro Umdrehung der Wickelwelle 36 wird folglich weniger Rollobahn freigegeben, als bei starrer Kupplung bei gleicher Winkeldrehung die beiden biegeelastischen jedoch schubsteifen Schubglieder 38, 39 zurücklegen würden.

Wegen der starren Kupplung mit der Rollobahn 22 sind sie gezwungen mit derselben Geschwindigkeit zu laufen, wie die Rollobahn 22, was in der Konsequenz dazu führt, dass die Drehbewegung der beiden Antriebszahnräder 47 und 48 gegenüber der Drehbewegung der Wickelwelle 36 retardiert ist. Hierdurch wird die Spiralfeder 54, ähnlich einer Uhrfeder, stärker aufgezogen.

Je nach Dimensionierug und Länge des Ausfahrhubs beschränkt sich jedoch das Maß der Relativdrehung auf ca. eine Umdrehung zwischen der Wickelwelle 36 und dem Antriebszahnrad 47 bzw. 48.

Am Schluss der Ausfahrbewegung, wenn der Zugstab 21 an der Fensteroberkante angekommen ist, wird folglich die Tuchspannung in der Rollobahn 22 etwas größer sein als zu Beginn.

Das Einfahren der Rollobahn geschieht sinngemäß in der umgekehrten Richtung, wobei sich die beiden Spiralfedern 54 wieder um das entsprechende Maß entspannen. Am Schluss der Einfahrbewegung liegt der Zugstab 31 wieder auf der Hutablage 19 auf, wobei die verbleibende Restspannung in den beiden Spiralfedern 54 für die erforderliche Tuchspannung in der Rollobahn 22 sorgt. Da die Spiralfedern 54 an beiden Seiten gleich dimensioniert sind, wirken auch an beiden Enden dieselben Kräfte auf den Zugstab 31.

Aufgrund der getroffenen Anordnung laufen die beiden starr mit dem Getriebemotor 43 gekuppelten Achszapfen 45 und 46 mit derselben Drehzahl und erzeugen somit dieselbe Antriebswirkung für die beiden Antriebszahnräder 47 und 48. Außerdem ist unschwer zu erkennen, dass die Schubglieder 38 und 39 nunmehr im Wesentlichen gestreckt verlaufen. Da die Antriebswirkung unmittelbar am Fußende der beiden Führungsschienen 25 und 26 eingeleitet wird, sind keine komplizierten Umlenkungen mehr erforderlich, um die beiden Schubglieder 38, 39 zu einer gemeinsamen Antriebsquelle zu bringen. Jedes Schubglied 38, 39 verfügt über seine eigene Antriebsquelle, die so platziert ist, dass eine minimale Auslenkung des Schubglieds 38, 39, ausgehend von der vollkommen gestreckten geraden Verlauf, erforderlich ist. Hierdurch vermindert sich die Reibung, verglichen mit den Lösungen nach dem Stand der Technik enorm. Auch die Speicherrohre 61 und 62 verlaufen weitgehend gerade und, da sie flexibel sind, können sie beliebig im Fahrzeug verlegt werden.

Die Kraft, die von dem Motor 43 aufgebracht werden muss, entspricht der Kraft, die erforderlich ist, um die beiden Spiralfedern 54 entsprechend dem Drehhub gegenüber der Wickelwelle 36 zusätzlich aufzuziehen zuzüglich der nunmehr sehr kleinen Reibung, die die beiden Schubglieder 38, 39 erfahren. Diese Reibung ist sehr klein, da die beiden Führungsschienen 25, 26 ebenfalls weitgehend gerade verlaufen. Ihr Krümmungsradius ist auch an der engsten Stelle extrem groß.

Bei der gezeigten Ausführungsform handelt es sich, wie bereits mehrfach betont, um eine prinzipielle Anordnung. Der Motor 43 ist hierbei als Getriebemotor gezeichnet, der am außen liegenden Ende des Achszapfens 45 angreift, so dass sich das Antriebszahnrad 47 zwischen der Wickelwelle 36 und dem Getriebemotor 43 befindet. Für den Fachmann ist ohne weiteres einsehbar, dass der Antrieb auch an dem Achszapfen 45 zwischen dem Antriebszahnrad 39 und der Wickelwelle 36 eingeleitet werden kann.

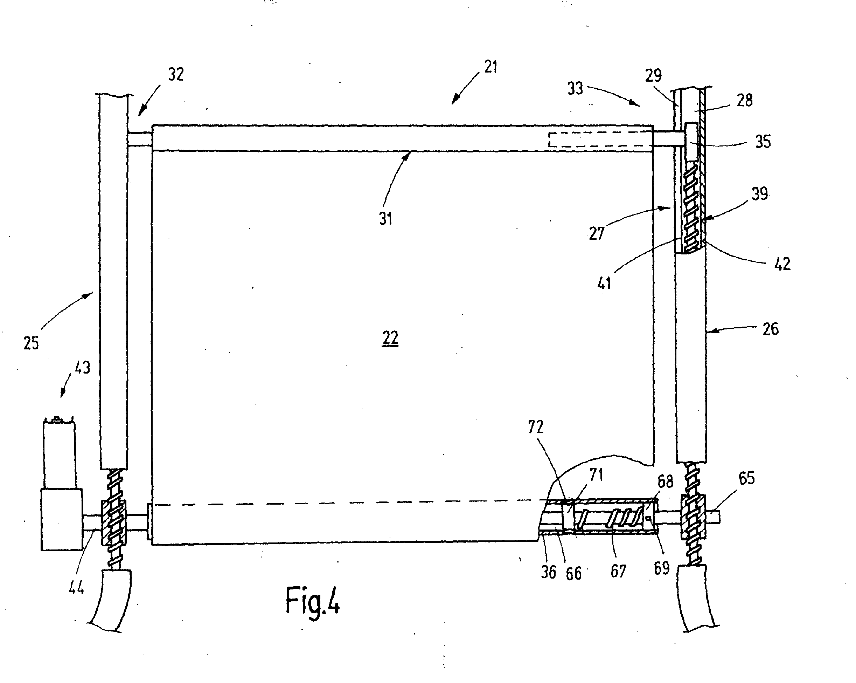

Bei dem zuvor erläuterten Ausführungsbeispiel war jedes Antriebszahnrad 47, 48 für sich drehelastisch angekuppelt. Fig. 4 zeigt eine Ausführungsform, bei der die beiden Antriebszahnräder 47 und 48 starr auf einer Verbindungswelle 65 sitzen. Die Verbindungswelle 65 läuft als Lagerachse durch die rohrförmige Wickelwelle 36 hindurch, wie dies in dem aufgebrochenen Teil gemäß Fig. 4 zu erkennen ist. Das andere Ende der Verbindungswelle 65 ist wiederum drehfest mit der Ausgangswelle 44 des Getriebemotors 43 gekuppelt.

Der Durchmesser der Verbindungswelle 65 ist deutlich kleiner als die lichte Weite der rohrförmigen Wickelwelle 36. Es entsteht ein Ringraum 66, in dem eine Schraubenfeder 67 untergebracht ist. Die Schraubenfeder ist einends in einem Lagerring 68 verankert, der über einen Stift 69 drehfest mit der Verbindungswelle 65 gekuppelt ist. Auf dem Lagerring 68 ist das betreffende Ende der Wickelwelle 36 gelagert. Das andere Ende der Schraubenfeder 67 ist drehfest mit einem Ringstück 71 verbunden, das seinerseits drehfest, beispielsweise mit Hilfe von Sicken 72, mit der Wickelwelle 36 verbunden ist.

Das andere Ende der Wickelwelle 36 ist spielarm auf der Verbindungswelle 65 gelagert.

Im Übrigen unterscheidet sich der Aufbau dieses Heckfensterrollos 21 nicht von dem zuvor erläuterten Heckfensterrollo 21.

Die beim Betrieb erforderliche Relativdrehung zwischen der Wickelwelle 36 und den Antriebszahnrädern 47 und 48 wird hier über eine Schraubenfeder 67 bewerkstelligt, die die drehelastische Verbindung zwischen der Verbindungswelle 65 und der Wickelwelle 36 herstellt.

Im Übrigen ist die Funktionsweise dieselbe, wie zuvor erläutert.

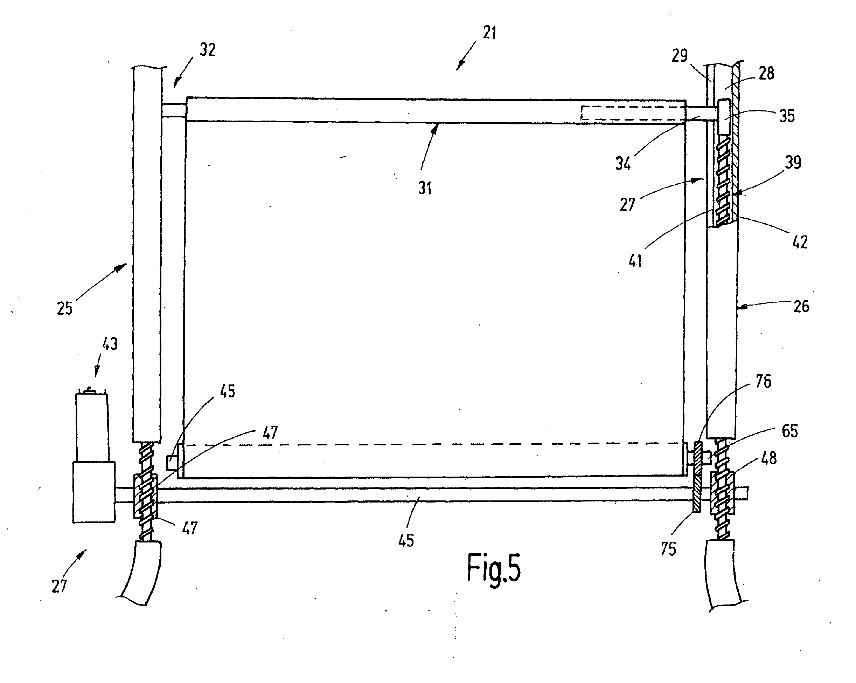

Fig. 5 zeigt eine Anordnung, bei der die Verbindungswelle 65 nicht, wie bei dem Ausführungsbeispiel gemäß Fig. 4, koaxial durch die rohrförmige Wickelwelle 36 hindurchführt, sondern achsparallel daneben angeordnet ist. Die beiden Zahnräder 47 und 48 sitzen auf der Verbindungswelle 65, und zwar wiederum so, dass sie, wie bei allen übrigen Ausführungsbeispielen, weitgehend mit einer Verlängerung der Führungsschienen 25, 26 fluchten, um eine minimale Auslenkung der Schubglieder 38, 39 zu erzeugen, damit die Reibungskräfte klein bleiben.

Ferner sitzt auf der Verbindungswelle 65 ein Zahnrad 75, das mit einem Stirnzahnrad 76 kämmt, das auf dem Achszapfen 65 angeordnet ist.

Für den Drehausgleich zwischen den Antriebszahnrädern 47 und 48 einerseits und der Wickelwelle 36 andererseits kommen bei dem Ausführungsbeispiel nach Fig. 5 mehrere Lösungen in Frage. Als erste Lösung wäre denkbar, die beiden Zahnräder 47 und 48 drehelastisch mit der Verbindungswelle 65 zu kuppeln in der Weise, wie dies zuvor in Verbindung mit Fig. 2 bzw. 3 erläutert wurde. Dort waren die Antriebszahnräder 47 und 48 drehelastisch mit den Lagerzapfen 45 und 46 verbunden, die ihrerseits drehfest mit der Wickelwelle 36 gekuppelt sind.

Eine andere Möglichkeit den erforderlichen Drehausgleich zu erreichen besteht darin, beispielsweise das Stirnzahnrad 76 drehelastisch mit dem Achszapfen 65 zu kuppeln, wie dies in Verbindung mit Fig. 3 erläutert ist.

Anstatt die drehelastische Kupplung in dem Stirnzahnrad 76 unterzubringen, kann die drehelastische Kupplung auch zwischen dem Zahnrad 75 und der Verbindungswelle 65 erfolgen. In jedem Falle ist die Wirkungsweise wie oben beschrieben. Es werden auch die in diesem Zusammenhang erläuterten Vorteile erzielt.

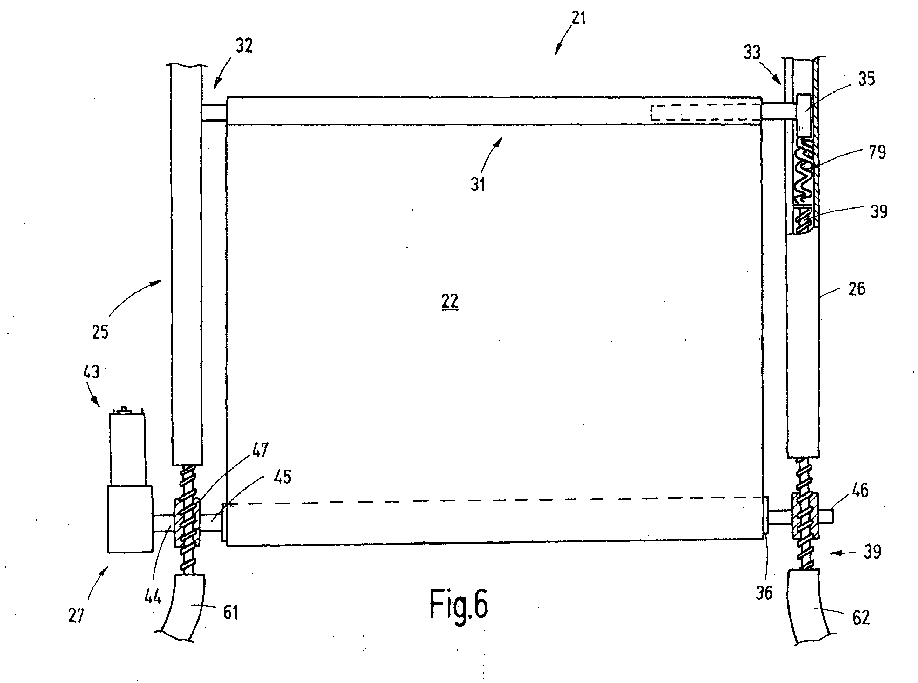

Fig. 6 zeigt eine alternative Ausführung, wie die Hubwegdifferenz, zwischen der Vorderkanten der Rollobahn 22 und den Schubgliedern 38, 39 beherrscht werden kann.

Der Grundaufbau des Rollos 21 nach Fig. 6 entspricht dem Aufbau, wie er ausführlich in Verbindung mit Fig. 2 erläutert ist. Allerdings sitzen die beiden Antriebszahnräder 47 und 48 drehfest auf den Achszapfen 45 und 46, so dass hier keine Relativdrehung zwischen der Wickelwelle 36 und den beiden Antriebszahnrädern 47 und 48 möglich ist. Die Hubwegdifferenz wird beherrscht mit Hilfe von Druckfedern 79. In dem aufgebrochenen Teil der Führungsschiene 26 ist zu erkennen, dass zwischen dem freien Ende des Schubglieds 39 und dem Gleitstück 35 die Schraubendruckfeder 79 eingefügt ist. Die Dimensionierung ist so gewählt, dass die Druckfeder 79, die sich an dem freien Ende des Schubglieds 39 abstützt, ständig eine Vorschubkraft auf den Zugstab 31 ausübt.

Aufgrund der oben gegebenen Funktionserläuterung zeigt die Druckfeder 79 die größte Länge, wenn die Rollobahn 22 soweit auf der Wickelwelle 36 aufgewickelt ist, wie es dem geöffneten Rollo entspricht. Wenn durch den Getriebemotor 43 die Wickelwelle 36, zusammen mit den beiden Zahnrädern 47 und 48, in Umdrehungen versetzt wird, beginnt der Zugstab 31 gegenüber den freien Enden der beiden Schubglieder 38, 39 zunehmend zu retardieren. Hierdurch werden die in den beiden Führungsschienen 25 und 26 enthaltenen Druckfedern 79 zunehmend komprimiert.

Da auch bei diesem Ausführungsbeispiel die beiden Antriebszahnräder 47 und 48 unmittelbar in Verlängerung des unteren Endes der beiden Führungsschienen 25 und 26 angeordnet sind, werden auch hier Verbindungsrohre zu einem gemeinsamen Antriebszahnrad vermieden, und entsprechend wird die Verlustreibung vermindert.

Es bedarf keiner weiteren Erklärung um zu erkennen, dass das zuvor in Verbindung mit den Figuren 2 bis 6 erläuterte Antriebskonzept für Rollos nicht nur auf die Anwendung bei Heckfensterrollos beschränkt ist. Dieses Antriebskonzept kann auch in Verbindung mit jeder anderen Art von Rollo verwirklicht werden, beispielsweise dem Seitenfensterrollo in dem viereckigen Fensterabschnitt 14 der hinteren Seitentür oder auch bei einem Dachfensterrollo. Eine zeichnerische Darstellung hierzu ist entbehrlich.

Zum Antrieb eines Fensterrollos für Kraftfahrzeuge werden in der Verlängerung der Führungsschienen zwei Antriebszahnräder vorgesehen. Die Antriebszahnräder sind drehelastisch mit der Wickelwelle gekuppelt. Der Antrieb geschieht mit Hilfe eines Getriebemotors der entweder auf die Zahnräder oder auf die Wickelwelle einwirkt. Die Positionierung der Antriebszahnräder in Verlängerung der Führungsschienen vermeidet die beim Stand der Technik vorhandenen Führungsrohre, wodurch die Reibverluste, die bis zu 80% der Antriebskraft beim Stand der Technik verzehrt, vermieden wird. Außerdem vereinfacht sich die Herstellung, weil die kompliziert geformten Verbindungsrohre vermieden sind.

## Patentansprüche

1. Fensterrollo (21) für Kraftfahrzeuge,
mit einer drehbar gelagerten Wickelwelle (36), die zwei Stirnenden aufweist,
mit einer Rollobahn (22), die mit einer Kante an der Wickelwelle (36) befestigt ist,
mit einem Zugstab (31), der an einer von der Wickelwelle (36) abliegenden Kante mit der Rollobahn (22) verbunden ist.
mit zwei Führungsschienen (25,26), die beidseits der aufgespannten Rollobahn (22) verlaufen und formschlüssig den Zugstab (31) führen,
mit zwei Schubgliedern (38,39), von denen das eine der einen Führungsschiene (25,26) und das andere der anderen Führungsschiene (25,26) zugeordnet ist, die durch die Führungsschienen (25,26) geführt sind, die beide eine Verzahnung (42) tragen und die mit dem Zugstab (31) zusammenwirken,
mit zwei Antriebszahnräder (48,49), von denen das eine dem einen Schubglieder (38,39) und das andere dem anderen Schubglied (38,39) zugeordnet ist und die bei den Stirnenden der Wickelwelle (36) angeordnet sind,
wobei die Schubglieder (38,39) kinematisch zwischen den Antriebsrädern (48,49) und dem Zugstab (31) liegen, mit einem elektrischen Antriebsmotor (43), und
mit federelastischen Ausgleichsmitteln (54,67,79) zur Kompensation der Längendifferenz.

2. Fensterrollo nach Anspruch 1, **dadurch gekennzeichnet, dass** der Zugstab (31) längenveränderlich ist.

3. Fensterrollo nach Anspruch 1, **dadurch gekennzeichnet, dass** die Führungsschienen (25,26) einends in der Nähe der Wickelwelle (36) beginnen,

4. Fensterrollo nach Anspruch 1, **dadurch gekennzeichnet, dass** die Führungsschienen (25,26) parallel oder konvergierend zueinander verlaufen.

5. Fensterrollo nach Anspruch 1, **dadurch gekennzeichnet, dass** jede Führungsschiene (25,26) eine Führungsnut (27) enthält.

6. Fensterrollo nach Anspruch 5, **dadurch gekennzeichnet, dass** sich der Querschnitt der Führungsnut (27) aus einer Nutenkammer (28) und einem Nutenschlitz (29) zusammensetzt, wobei der Durchmesser der Nutenkammer (28) größer ist als die lichte Weite des Schlitzes (29) derart, dass eine hinterschnittene Führungsnut (28) entsteht.

7. Fensterrollo nach Anspruch 6, **dadurch gekennzeichnet, dass** in der Nutenkammer (28) das Schubglied (38.39) ausknicksicher geführt ist.

8. Fensterrollo nach Anspruch 1, **dadurch gekennzeichnet, dass** das Schubglied (38.39) eine Rundumverzahnung (42) aufweist.

9. Fensterrollo nach Anspruch 1, **dadurch gekennzeichnet, dass** das Antriebszahnrad (48,49) ein Stirnzahnrad ist.

10. Fensterrollo nach Anspruch 1, **dadurch gekennzeichnet, dass** die beiden Antriebszahnräder (48,49) mit der Wickelwelle (36) verbunden sind.

11. Fensterrollo nach Anspruch 1, **dadurch gekennzeichnet, dass** die beiden Antriebszahnräder (48,49) koaxial zu der Wickelwelle (36) angeordnet sind.

12. Fensterrollo nach Anspruch 1, **dadurch gekennzeichnet, dass** die beiden Antriebszahnräder (48,49) auf einer Verbindungswelle (65) sitzen, die durch die Wickelwelle (36) hindurch führt.

13. Fensterrollo nach Anspruch 1, **dadurch gekennzeichnet, dass** die beiden Antriebszahnräder (48,49) auf einer Verbindungswelle (65) sitzen, die parallel zu der Wickelwelle (36) verläuft.

14. Fensterrollo nach Anspruch 1, **dadurch gekennzeichnet, dass** der Antriebsmotor (43) mit der Wickelwelle (36) gekuppelt ist.

15. Fensterrollo nach Anspruch 12 oder 13, **dadurch gekennzeichnet, dass** der Antriebsmotor (43) mit der Verbindungswelle (65) gekuppelt ist.

16. Fensterrollo nach Anspruch 12 oder 13, **dadurch gekennzeichnet, dass** die Ausgleichsmittel (54,67,79) zwischen der Verbindungswelle (65) und der Wickelwelle (36) angeordnet sind und dass die Antriebszahnräder (48,49) drehfest mit der Verbindungswelle (65) verbunden sind.

17. Fensterrollo nach Anspruch 13, **dadurch gekennzeichnet, dass** ein Zahnradpaar (75,76) vorgesehen ist, von denen eines mit der Wickelwelle (36) und das andere mit der Verbindungswelle (65) gekuppelt ist.

18. Fensterrollo nach Anspruch 1, **dadurch gekennzeichnet, dass** die Ausgleichsmittel von einer Schraubenfeder (67,79) oder einer Spiralfeder (54) gebildet sind.

19. Fensterrollo nach Anspruch 18, **dadurch gekennzeichnet, dass** die Spiralfeder (54) in einer Ausnehmung des Antriebszahnrads (48,49) sitzt.

20. Fensterrollo nach Anspruch 13, **dadurch gekennzeichnet, dass** die Ausgleichsmittel zwei Federn (54) umfassen, von denen je eine zwischen einem der Antriebszahnräder (48,49) und der Verbindungswelle (65) angeordnet ist.

21. Fensterrollo nach Anspruch 1, **dadurch gekennzeichnet, dass** die Ausgleichsmittel zwei Federn (54) umfassen, von denen je eine zwischen der Wickelwelle (36) und dem zugehörigen Antriebszahnrad (48,49) angeordnet ist.

22. Fensterrollo nach Anspruch 1, **dadurch gekennzeichnet, dass** die Ausgleichsmittel zwei Federn (79) umfassen, von denen je eine zwischen dem Zugstab (31) und dem einen Schubglied (38,39) und die andere zwischen dem Zugstab (31) und dem anderen Schubglied (38,39) angeordnet ist.

23. Fensterrollo nach Anspruch 22, **dadurch gekennzeichnet, dass** die Federn (79) Druckfedern sind.

24. Fensterrollo nach Anspruch 1, **dadurch gekennzeichnet, dass** Mittel vorgesehen sind, die dazu eingerichtet sind, das jeweilige Schubglied (38,39) mit seinem zugehörigen Antriebszahnrad (48,49) in Eingriff zu halten.

25. Fensterrollo nach Anspruch 1, **dadurch gekennzeichnet, dass** für jedes Antriebszahnrad (48,49) ein eigenes Getriebegehäuse vorgesehen ist.

26. Fensterrollo nach Anspruch 1, **dadurch gekennzeichnet, dass** für jedes Schubglied (38,39) ein eigenes Speicherrohr (61,62) vorhanden ist, das bei eingefahrenem Fensterrollo das Leertrum des Schubglieds (38,39) aufnimmt.

27. Fensterrollo nach Anspruch 26, **dadurch gekennzeichnet, dass** das Speicherrohr (61,62) aus einem flexiblen Material besteht.
